# EUROPÄISCHE PATENTSCHRIFT

(11) **EP 3 884 093 B1**
(45) Veröffentlichungstag und Bekanntmachung des Hinweises auf die Patenterteilung: **09.08.2023**
(21) Anmeldenummer: 19813391.0
(22) Anmeldetag: 22.11.2019
(51) Int. Cl.: D01H 7/04, F16C 27/00

(54) **SPINDEL EINER RINGSPINNMASCHINE**
SPINDLE FOR A SPINNING MACHINE
BRÔCHE POUR UN MÉTIER À FILER

(30) Priorität: 23.11.2018 CZ 20180645
(43) Veröffentlichungstag der Anmeldung: 29.09.2021
(73) Patentinhaber: Maschinenfabrik Rieter AG, 8406 Winterthur (CH)
(72) Erfinder: JUNGMAYR, Gerald, 4050 Traun (AT); SANTNER, Robert, 4040 Linz (AT); PASSENBRUNNER, Josef, 4482 Ennsdorf (AT); SILBER, Siegfried, 4202 Kirchschlag (AT)
(86) Internationale Anmeldenummer: PCT/IB2019/060069
(87) Internationale Veröffentlichungsnummer: WO 2020/105006

(56) Entgegenhaltungen:
- EP-A1- 0 570 822
- EP-A1- 1 927 688
- WO-A1-2005/045106
- WO-A1-2017/064214
- CH-A- 536 369
- FR-A- 1 204 630
- FR-A- 1 264 701
- US-A- 4 117 359
- PROLL ANDREAS J ET AL: "Design and optimization of a special magnetic levitated drive with unbalance robustness", 2015 IEEE 11TH INTERNATIONAL CONFERENCE ON POWER ELECTRONICS AND DRIVE SYSTEMS, IEEE, 9. Juni 2015 (2015-06-09), Seiten 917-922, XP033194715, DOI: 10.1109/PEDS.2015.7203413 [gefunden am 2015-08-14]

## Beschreibung

### Technisches Gebiet

Die Erfindung betrifft eine Spindel einer Ringspinnmaschine gemäss dem Oberbegriff des unabhängigen Anspruchs.

### Technologischer Hintergrund

Eine Spindel für eine Ringspinnmaschine ist beispielsweise aus der WO 2017/064214 A1 bekannt. Die darin gezeigte Spindel umfasst einen Spindelschaft, der über wenigstens zwei Radial- Magnetlager radial und über ein mechanisches oder ein magnetisches Axiallager axial gelagert ist. Die WO 2017/064214 A1 offenbart ausserdem eine Spindel, bei welcher der Spindelschaft zusätzlich über wenigstens zwei den Radial-Magnetlagern benachbarte Gleitlager radial gelagert ist. Diese Gleitlager sollen dazu dienen beim Durchlaufen der "kritischen Drehzahl" auftretende Schwingungen der Spindel aufzufangen und Beschädigungen der empfindlichen Magnetlager zu vermeiden. Ohne derartige Gleitlager soll es gemäss der WO 2017/064214 A1 zu Berührungen und gegenseitiger Beschädigung der Magnetlagerringe und kommen. Die WO 2017/064214 A1 schlägt die Verwendung entsprechender Gleitlager vor, um eine ansonsten beim Hochlaufen einer Spindel normale Kontaktierung von Rotor und Stator zu vermeiden.

Die DE 197 33 239 A1 offenbart eine magnetische Lagerung und einen Antrieb für eine Galette, wie sie für das Verziehen von textilen Fasern verwendet werden kann. Die Offenbarung zeichnet sich dadurch aus, dass die Funktion der Lagerung in radialer und axialer Richtung durch aktive und/oder passive magnetische Lager erfolgt, wobei der Antriebsmotor zwischen den radialen Lagern angeordnet ist und sich das axiale Lager ausserhalb dieser Anordnung befindet. Solche Galetten werden für das Verziehen von Kunstfasern nach dem Extrudieren verwendet, wofür die Rotationsachse der Galetten während dem Betrieb normalerweise horizontal ausgerichtet werden. Die in der DE 197 33 239 A1 offenbarten Lager und Antriebe sind folglich auch klar auf eine solche Betriebslage ausgerichtet. Galetten werden zudem auch nicht für Spinnverfahren verwendet.

Proll et al. beschreiben in ihrem Artikel "Design and optimization of a special magnetic levitated drive with unbalance robustness" (DOI: 10.1 109/PEDS.2015.7203413) einen teilweise magnetisch gelagerten bürstenlosen Gleichstrommotor.

### Darstellung der Erfindung

Nachteilig an den oben genannten Ausführungsformen mit radial passiven magnetischen Lagern ist, dass durch die Unwucht des Rotors beim Durchlaufen der "kritischen Drehzahl" Schwingungen mit erheblichen Amplituden auftreten können. Dieses Phänomen erhöht einerseits den für das Hochfahren einer solchen Spindel notwendigen Energiebedarf, was bei einer Spinnmaschine mit einer Vielzahl von Spindeln problematisch sein kann. Andererseits können solche Schwingungen zu einem Kontakt zwischen dem Rotor und nicht rotierenden Teilen führen. Ein solcher Kontakt führt unweigerlich zu Verschleiss(mittels Abrieb etc.), welcher die Lebendsauer der Spindel reduziert, bzw. den Wartungsaufwand erhöht. Durch die Verwendung zusätzlicher Gleitlager, wie dies etwa in der WO 2017/064214 A1 vorgeschlagen wird, kann zwar unter Umständen der während der Schwingungen entstehende Abrieb reduziert werden, der eigentliche Schwingungsvorgang wird jedoch kaum reduziert. Ausserdem erhöhen solche Gleitlager einerseits die Herstellungskosten einer entsprechenden Spindel signifikant und erhöhen das Gewicht des Rotors, wodurch der Energiebedarf zum Hochfahren einer entsprechenden Spindel erhöht wird. Beides kann sich nachteilig auf die Anschaffungs- und auch die Betriebskosten entsprechender Spindeln auswirken.

Es ist eine Aufgabe der Erfindung eine Spindel zur Verfügung zu stellen, welche wenigstens einen der obgenannten Nachteile behebt oder reduziert.

Eine Aufgabe kann somit darin gesehen werden, dass eine relativ kostengünstige Spindel für Spinnmaschinen mit einem einzelmotorischen Antrieb und einer Magnetlagerung geschaffen werden soll, welche die obgenannten Probleme beim Hochfahren nicht oder in nur reduziertem Masse aufweist. Erfindungsgemäss geschieht dies mittels einer ausreichenden Dämpfung des Rotors, welche ein Entstehen von kritischen Schwingungen des Rotors im Bereich der kritischen Drehzahl während dem Hochfahren einer Spindel verhindert.

Eine Aufgabe der vorliegenden Erfindung kann somit auch darin gesehen werden, eine Spindel für Spinnmaschinen (insbesondere für Ringspinnmaschinen) mit einem einzelmotorischen Antrieb zu schaffen, bei der eine ausreichend hohe radiale Steifigkeit des Rotors, insbesondere im Bereich der Rotorspitze (dem Bereich, in welchem bei Verwendung für eine Ringspinnmaschine ein Kops angeordnet wird) erreicht werden kann. Mit derartigen besonders steifen (bzw. schwingungsgedämpften) Spindeln können Kapselungen von Kopsen selbst bei hohen Drehzahlen sicher umgesetzt werden, da aufgrund der wenigstens stark gedämpften Schwingungen ein Kontakt zwischen dem hergestellten Garn und der Kopskapselung verhindert wird. Somit können mittels der vorliegenden Erfindung kostengünstig besonders effizient zu betreibende gekapselte Spinnstellen geschaffen werden.

Gelöst werden diese Aufgaben durch eine Spindel entsprechend dem Oberbegriff des unabhängigen Anspruchs, welcher dadurch gekennzeichnet ist, dass der Stator mit mindestens einem Dämpfungselement mit dem Spindellagergehäuse verbunden ist. Dadurch, dass der Stator mit dem Spindellagergehäuse in gedämpfter Weise mit dem Spindellagergehäuse wirkverbunden ist können insbesondere kritische Schwingungsamplituden im Bereich der "kritischen Drehzahlen" beim Hochfahren einer erfindungsgemässen Spindel vermieden werden. Damit kann einerseits effizient verhindert werden, dass es zu einem schädigenden Kontakt zwischen Rotor und Stator kommt. Andererseits kann dadurch auch die zum Überwinden der kritischen Drehzahlen aufzuwendende Antriebsenergie wesentlich gesenkt werden. Ausserdem wirkt sich eine erfindungsgemässe Dämpfung auch allgemein positiv auf das Spinnergebnis aus, da Vibrationen bspw. aufgrund von Asymmetrien in einem Kops (z.B. Aufgrund eines Garnfehlers oder auch nur minimal beschädigten Hülse) auch während dem Normalbetrieb gedämpft werden können. Dies ist besonders vorteilhaft bei hohen Drehzahlen und erlaubt eine effiziente Kopskapselung, wie nachfolgen noch genauer beschrieben wird.

Mit anderen Worten überwindet die vorliegende Erfindung die aus dem Stand der Technik bekannten Probleme durch den Einsatz von passiven Dämpfungselementen, welche die Rotorschwingungen effektiv abdämpfen. Die Rotorschwingungen führen zu Schwingungen des elastisch (gedämpft) gelagerten Stators. Die Schwingungen des elastisch gelagerten Stators werden durch die Dämpfungselemente gedämpft, da diese die Schwingungsenergie dissipieren (in Wärme umwandeln). Aufgrund der Kopplung des elastisch gelagerten Stators mit dem Rotor (über die passiven, magnetischen Radiallager) erfolgt somit eine (indirekte) Dämpfung der Rotorschwingungen, wodurch eine Kontaktierung des Rotors mit nicht rotierenden Teilen der Spindel im Normalfall gänzlich verhindert oder wenigstens stark reduziert werden kann. Dies reduziert den Wartungsaufwand und auch die Kosten für den Betrieb einer entsprechenden Spindel.

Gemäss einer erfindungsgemässen Ausführungsform ist der Stator elastisch gelagert und (im Betriebszustand) mit mindestens einem oberen und einem (in Richtung der Rotationsachse des Stators davon beabstandeten) unteren Dämpfungselement mit dem Spindellagergehäuse verbunden. Damit kann auch mit relativ einfachen (z.B. kleinen) Dämpfungselementen eine effiziente Dämpfung der Spindel erzielt werden. Besonders gute Ergebnisse können mit elastisch-plastischen, bzw. viskoelastischen Dämpfungselementen erzielt werden.

Der Rotor erstreckt sich entlang seiner Rotationsachse zwischen einem distalen Rotor-Ende und einem proximalen Rotor-Ende. Als distales Rotor-Ende wird hierin jenes Ende des Rotors betrachtet wird, das in einem Betriebszustand die Rotorspitze bildet, an welcher bspw. ein Kops befestigt werden kann. Als proximales Rotor-Ende wird hierin jenes Ende des Rotors angesehen welches sich in einem Betriebszustand im Bereich des Stators befindet. In einem normalen Betriebszustand einer erfindungsgemässen Spindel ist die Rotationsachse des Rotors normalerweise in vertikaler Richtung ausgerichtet (im Wesentlichen senkrecht zum Untergrund einer Spinnmaschine) und das distale Rotor-Ende befindet sich in grösserer Höhe (als "oben" bezeichnet) gegenüber dem Untergrund der Spinnmaschine als das proximale Rotor-Ende (als "unten" bezeichnet). Entsprechend ist ein oberes Dämpfungselement gemäss der vorliegenden Erfindung normalerweise im Betriebszustand in vertikaler Richtung über einem unteren Dämpfungselement angeordnet. Analoges gilt für ein oberes und unteres Radiallager.

Gute Dämpfungsresultate können erzielt werden, wenn wenigstens ein Dämpfungselement als mechanisches Befestigungsmittel des Stators zum Spindellagergehäuse dient, bzw. das wenigstens eine Dämpfungselement den Stator in radialer und/oder axialer Richtung gegenüber dem Spindellagergehäuse lagert. Ebenfalls kann auf diese Weise eine hohe Funktionsintegration erzielt werden und somit die Anzahl Bauteile reduziert werden.

Eine besonders gute Vibrationsdämpfung kann erzielt werden, wenn die mindestens zwei passiven magnetischen Radiallager einen direkt am Rotor angebrachten inneren Lagerteil und einen direkt am Stator angebrachten äusseren Lagerteil aufweisen.

Bevorzugt weist das obere Dämpfungselement eine geringere Steifigkeit als das untere Dämpfungselement auf. Es hat sich gezeigt, dass durch eine solche Ausgestaltung der Dämpfelemente bei mit erfindungsgemässen Magnetlagern gelagerten Spindeln ein besonders zuverlässiges Dämpfungsverhalten erzielt werden kann, insbesondere dass so auch Schwingungen unterschiedlicher Frequenzbänder jeweils besonders effizient gedämpft werden können.

Gemäss einer Ausführungsform einer erfindungsgemässen Spindel ist weist das obere Dämpfungselement eine radiale Steifigkeit von kleiner als 100 N/mm, vorzugsweise von 25 N/mm, und das untere Dämpfungselement eine radiale Steifigkeit von grösser als 60 N/mm auf. Es hat sich gezeigt, dass bei einer derartigen Auslegung sowohl eine gute Dämpfung beim Hochfahren einer Spindel im Bereich der kritischen Drehzahl als auch während dem Normalbetrieb erzielt werden kann.

Es hat sich gezeigt, dass gerade im Bereich der kritischen Drehzahl eine besonders effiziente Ableitung der Schwingungsenergie des Rotors in den Stator und schliesslich das wenigstens eine Dämpfungselement erzielt werden kann, wenn die die Steifigkeit der passiven magnetischen Radiallager grösser als 20 N/mm ist. Dies gilt insbesondere dann, wenn der Abstand der beiden passiven magnetischen Radiallager (in Richtung der Rotationsachse des Rotors) grösser als 50 mm ist.

Eine besonders gut vibrationsgedämpfte Ausführungsform einer erfindungsgemässen Spindel kann erzielt werden, wenn die passiven magnetischen Radiallager entlang der Rotationsachse des Rotors zwischen einem oberen Dämpfungselement und einem unteren Dämpfungselement angeordnet werden. Auf diese Weise wird einerseits die Eigenmasse des Stators besonders vorteilhaft in das gedämpfte Schwingungssystem eingesetzt und andererseits werden die Dämpfungselemente aufgrund von Hebelwirkungen besonders stark belastet, was zu einer besonders guten Dämpfwirkung führt.

Eine besonders gute Schwingungsdämpfung kann erzielt werden, wenn ein unteres Dämpfungselement und ein oberes Dämpfungselement so angeordnet werden, dass sich entlang der Rotationsachse betrachtet die passiven magnetischen Radiallager zwischen dem unteren und dem oberen Dämpfungselement befinden, wobei sich das am nächsten bei dem proximalen Rotor-Ende gelegene passive magnetische Radiallager etwa in der Mitte zwischen dem oberen und dem unteren Dämpfungselement befindet.

Gemäss einer besonders bevorzugten Ausführungsform ist die Steifigkeit der passiven, magnetischen Radiallager grösser als 20 N/mm und der Abstand der beiden passiven, magnetischen Radiallager in Richtung der Rotationsachse des Rotors ist grösser als 50 mm, das obere Dämpfungselement weist eine radiale Steifigkeit von kleiner als 100 N/mm, vorzugsweise von 25 N/mm, und das untere Dämpfungselement eine radiale Steifigkeit von grösser als 60 N/mm auf und der Rotor ist so ausgeführt, dass die erste biegekritische Frequenz oberhalb der Nenndrehzahl der Spindel liegt. Es hat sich herausgestellt, dass eine derart dimensionierten Spindel

Gemäss einer Ausführungsform der Erfindung besteht wenigstens ein Dämpfungselement wenigstens teilweise aus Gummi oder aus einem Polymer oder aus Kork.

Gemäss einer weiteren Ausführungsform einer erfindungsgemässen Spindel ist der Rotor so ausgeführt, dass die erste biegekritische Frequenz oberhalb der Nenndrehzahl der Spindel liegt. Somit können sowohl während dem Hochfahren als auch während dem Normalbetrieb kritische Resonanzphänomene sicher vermieden werden.

Vorteilhaft ist der Rotor durch das aktive, magnetische Axiallager am unteren Wellenende (im Bereich des distalen Rotor-Endes) gelagert. Mittels einer solchen Anordnung können mögliche Vibrationen des Rotors in axialer Richtung weitestgehend entkoppelt werden, was eine bessere Dämpfung mittels des wenigstens einen Dämpfungselements bewirkt werden.

Eine besonders effiziente Dämpfung kann erzielt werden, wenn das aktive magnetische Axiallager einen mit dem Stator mechanisch verbundenen ersten Lagerteil und einen mit dem Rotor mechanisch verbundenen zweiten Lagerteil aufweist. Damit können auch Vibrationen in axialer Richtung über das mindestens eine Dämpfungselement abgebaut werden. Bevorzugt ist der erste Lagerteil unmittelbar mit dem Stator verbunden.

Gemäss einer bevorzugten Ausführungsform ist der Stator röhrenförmig (Hohlzylinder) und das aktive magnetische Axiallager ist im Inneren des Stators angeordnet und mit dem Stator mechanisch verbunden. Somit können auch vom Rotor auf das Axiallager übertragene axiale Schwingungen besonders gut gedämpft werden.

Gemäss einer Ausführungsform einer erfindungsgemässen Spindel ist auf dem Rotor eine zerstörungsfrei entfernbare Klemmkrone angeordnet. Vorteilhaft ist das obere Dämpfungselement durch Entfernen einer Klemmkrone einfach austauschbar.

Vorteilhaft weist eine erfindungsgemässe Spindel einen Axialanschlag auf, welcher Verschiebungen des Rotors relativ zum Stator in axialer Richtung begrenzt, bevorzugt wenigstens in Richtung des distalen Rotor-Endes. Eine Anordnung eines entsprechenden Axialanschlags kann bspw. mittels einer Pressverbindung mit einer Öffnung des Spindellagergehäuses verbunden sein, was ein einfache Montage einer solchen Spindel ermöglicht, da die Anordnung auf dem Rotor angeordnet und gemeinsam mit diesem montiert werden kann.

Die erfindungsgemässe Spindel hat den Vorteil, dass die korrekte Auslegung der Spindel (radiale Steifigkeit der passiven, magnetischen Radiallager und deren Anordnung; radiale Steifigkeit der Dämpfungselemente und deren Anordnung; die Dämpfungswirkung des Dämpfermaterials sowie das Massenverhältnis von Stator zu Rotor) verhindert, dass beim Hochlaufen eine Berührung zwischen Rotor und dem elastisch gelagerten Stator oder dem Spindellagergehäuse auftritt.

Gemäss einer Ausführungsform der Erfindung weist die Spindel einen Motor zum Antrieb des Rotors auf. Gute Resultate können erzielt werden, wenn der Motor ein Elektromotor ist, welcher einen Motor-Stator aufweist, der drehfest mit dem Stator der Spindel verbunden ist und die Motor-Rotor auf dem Rotor der Spindel angeordnet ist und drehfest mit diesem verbunden ist. Um eine gute Dämpfung der von einem Motor erzeugten Vibrationen zu erzielen ist es vorteilhaft, wenn der Motor zwischen den passive magnetischen Radiallagern angeordnet ist.

Gemäss einer weiteren Ausführungsform einer erfindungsgemässen Spindel kann diese eine Kopskapselung (Kapselungsrohr) aufweisen, die den Rotor im Betrieb wenigstens teilweise umschliesst (insbesondere im Bereich des distalen Rotor-Endes). Eine solche Kapselung kann die Luftströmung um einen auf der Spindel hergestellten Kops positiv verändern und somit negative Einflüsse aufgrund von Luftreibung reduzieren. Eine erfindungsgemäss gedämpfte Spindel ermöglicht eine solche Kapselung, da letztere eine radiale Zugkraft auf den Rotor bewirkt, welche mit der Drehzahl ansteigt, weswegen eine hohe Steifigkeit des Rotors im Bereich der Rotorspitze notwendig ist, da es andernfalls zu einem Kontakt von Garn und Kapselungsrohr kommen kann.

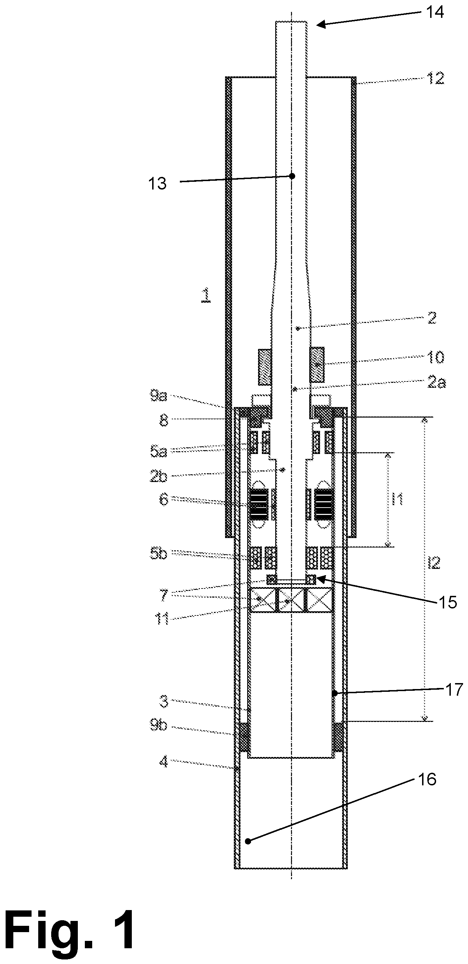

Gemäss einer bevorzugten Ausführungsform der Erfindung kann der Stator einen zylinderförmigen Abschnitt aufweisen, der wenigstens teilweise in einer zylinderförmigen Öffnung des Spindellagergehäuse angeordnet ist, wobei die Zylinderachse des zylinderförmigen Abschnitts des Stators auf der Zylinderachse der zylinderförmigen Öffnung des Spindellagergehäuses liegt (koaxiale Anordnung), wie in der enthaltenen Fig. 1 gezeigt ist. Auf diese Weise kann eine besonders kompakte und zugleich vibrationsarme Spindel erzeugt werden.

Eine besonders gute Dämpfung von Vibrationen kann erzielt werden, wenn wenigstens ein Dämpfungselement in einem Zwischenraum zwischen einer inneren Wandung 16der zylinderförmigen Öffnung des Spindellagergehäuses und einer äusseren Wandung des Stators angeordnet ist, wie in der enthaltenen Fig. 1 gezeigt ist. Auf diese Weise kann ein Dämpfungselement zugleich als Lager für den Stator dienen.

Gute Resultate können erzielt werden, wenn das mindestens eine Dämpfungselement im Wesentlichen ringförmig ausgebildet ist, und zwischen einer inneren Wandung 16 einer zylinderförmigen Öffnung des Spindellagergehäuses und einer äusseren Wandung 17 des Stators koaxial auf der Rotationsachse des Rotors angeordnet ist, wie nachfolgend noch genauer gezeigt wird.

Die vorliegende Erfindung ist ebenfalls auf eine Spinnmaschine, insbesondere eine Ringspinnmaschine mit wenigstens einer Spindel gemäss einem der vorhergehenden Ansprüche gerichtet. Im Vergleich zu den aus dem Stand der Technik bekannten Spinnmaschinen lässt sich eine solche Spinnmaschine aufgrund der besonders vibrationsarmen Spindeln besonders effizient und kostengünstig betreiben.

Gemäss einer bevorzugten Ausführungsform einer erfindungsgemässen Spinnmaschine weist wenigstens eine Spindel während dem Betrieb eine Kopskapselung auf, wodurch negative Effekte aufgrund von Luftströmungen im Bereich der Spindeln reduziert werden können.

### Kurze Beschreibung der Figuren

Weitere Vorteile der Erfindung sind in den nachfolgenden Ausführungsbeispielen beschrieben, wobei die Fig. 1 den Aufbau einer erfindungsgemässen Spindel zeigt.

### Wege zur Ausführung der Erfindung

Die Fig. 1 zeigt schematisch den Aufbau einer erfindungsgemässen Spindel 1. Es handelt sich um eine Spindel 1 mit einem einzelmotorischen Antrieb für Spinnmaschinen, so zum Beispiel für Ringspinnmaschinen. Die Spindel 1 umfasst einen Rotor 2 mit einem Rotoroberteil 2a und einem Rotorunterteil 2b, der als Innenläufer ausgestaltet ist. Der Rotoroberteil 2a dient zur Aufnahme der Hülse einer Ringspinnmaschine. Die Spindel 1 umfasst weiter einen elastisch gelagerten Stator 3 und ein um den Stator 3 angeordnetes Spindellagergehäuse 4. Das Spindellagergehäuse 4 ist weitgehend drehfest mit dem Stator 3 verbunden.

Der Rotor 2 ist durch zwei passive magnetische Radiallager, ein oberes Radiallager 5a und ein unteres Radiallager 5b im Stator 3 gelagert. Zwischen den Radiallagern 5a, 5b befindet sich ein Motor 6. Am unteren Wellenende ist der Rotor 2 durch ein aktives, magnetisches Axiallager 7 gelagert. Das magnetische Axiallager 7 umfasst einen axialen Positionssensor und eine Sensor-Platine 11. Der Motor 6 könnte sich auch ober- oder unterhalb der Radiallager 5a, 5b befinden. Ebenso könnte sich das aktive Radiallager 5a, 5b oder der Sensor an einer anderen Position befinden. Ein Axialanschlag 8 befindet sich unterhalb des oberen Endes des Spindelgehäuses 4. Der Rotor 2 kann mit nach unten abnehmendem Rotordurchmesser und ohne auskragende Ausführung gestaltet sein. Der elastische gelagerte Stator 3 ist durch zwei Dämpfungselemente 9a, 9b gelagert. Ein oberes Dämpfungselement 9a befindet sich am oberen Ende des Stators 3 zwischen dem Stator und dem Spindellagergehäuse 4. Ein unteres Dämpfungselement 9b befindet sich an einem unteren Ende des Stators 3, das hier durch ein Rohr ausgestaltet ist. Allgemein muss im Rahmen der Erfindung der elastisch gelagerte Stator 3 durch mindestens ein Dämpfungselement mit dem Spindelgehäuse 4 verbunden sein. Allerdings sind auch Ausführungsformen denkbar, in denen mehrere Dämpfungselemente vorhanden sind. Die Dämpfungselemente können beliebig am Stator 3 positioniert werden und sind nicht auf dessen Enden beschränkt.

Der Stator 3 und auch das Spindellagergehäuse 4 sind der gezeigten Ausführungsform als Hohlzylinder ausgebildet, wobei der Stator 3 in einer zylinderförmigen Öffnung des Spindellagergehäuse 4 angeordnet ist, wobei die Zylinderachse des zylinderförmigen Abschnitts des Stators 3 auf der Zylinderachse der zylinderförmigen Öffnung des Spindellagergehäuses 4 liegt, die beide koaxial mit der Rotationsachse 13 des Rotors 2 sind. Die Dämpfungselemene 9a, 9b befinden sich im Zwischenraum zwischen der inneren Wandung 16 der zylinderförmigen Öffnung des Spindellagergehäuses 4 und der äusseren Wandung 17 des Stators 3.

Zur Verringerung der Luftreibungsverluste kann der gezeigte Rotor 2 im Betrieb durch eine Kopskapselung 12 umschlossen werden. Diese Kapselung bewirkt eine radiale Zugkraft auf den Rotor 2, welche mit der Drehzahl ansteigt. Die radiale Steifigkeit an der Rotorspitze wird durch die Steifigkeit und Lage der passiven Magnetlager 5a, 5b, die Steifigkeit und Lage der Dämpfungselemente 9a, 9b und die geometrische Anordnung der benannten Elemente festgelegt.

Im gezeigten Ausführungsbeispiel wird der elastische Stator durch die zwei Dämpfungselemente 9a, 9b gelagert. Die richtige Steifigkeit und Anordnung der Dämpfungselemente 9a, 9b ist ausschlaggebend für die Radial- und Kippsteifigkeit des elastischen Stators 3 um seinen Schwerpunkt. Da der Rotor von 0 Hz auf ca. 500 Hz beschleunigt, weist die Schwingung zufolge der Rotorunwucht somit ebenfalls eine Frequenz von 0 Hz bis 500 Hz auf. Vor allem im Drehzahlbereich 10 Hz bis -150 Hz muss das Dämpfungsmaterial eine angepasste Steifigkeit und Dämpfung besitzen. In diesem Drehzahlbereich liegen typischerweise die Resonanzfrequenzen vom Zwei-Masse-Schwingungssystem Rotor 2 und elastisch gelagerter Stator 3. Das obere Dämpfungselement wird weich mit einer radialen Steifigkeit von kleiner als 100 N/mm und vorzugsweise von 25 N/mm ausgelegt (bei 10 Hz und einer Temperatur von 20°C). Im oberen Dämpfungselement 9a wird die Schwingungsenergie des elastischen Stators 3 und dadurch auch die Schwingungsenergie des Rotors 2 absorbiert. Das Material des oberen Dämpfungselements 9a weist eine hohe Dämpfung auf. Das untere Dämpfungselement 9b ist vergleichsweise hart mit einer radialen Steifigkeit von grösser 60 N/mm ausgelegt. Zu diesem Zwecke wären beispielsweise auch 1000 N/mm geeignet. Das untere Dämpfungselement 9b hat somit auch eine höhere Axialsteifigkeit und kann somit die Gewichtskraft des elastischen Stators 3 und Rotors 2 aufnehmen. Durch die hohe radiale Steifigkeit ist die Schwingungsamplitude des unteren Dämpfungselements 9b gering. Es muss daher keine besondere Anforderung an den Dämpfungswert des Materials gestellt werden.

Der Abstand der beiden passiven Magnetlager liegt bei l1 > 50 mm und der Abstand der beiden Dämpfungselemente bei l2 > 50 mm. Mittels der genannten Mindestmasse an radialer Steifigkeit und das Mindestmass l1 an axialem Abstand der passiven Magnetlager und der Dämpfungselemente l2 kann die eine ausreichend hohe radiale Steifigkeit des Rotors an der Rotorspitze erreicht werden. Die Steifigkeit der passiven Magnetlager kann bei kr > 20 N/mm liegen.

Montage, Demontage. Die vorgeschlagene konstruktive Ausführung mit den passiven Magnetlagern 5a, 5b und mit einem aktiven Magnetlager 7 erlaubt eine einfache Montage und Demontage des Rotors 2. Der Axialanschlag 8 wird am Rotor 2 vormontiert und bei der Montage des Rotors 2 in den Stator 3 wird der Axialanschlag 8 in den Stator 3 eingepresst. Die dargestellte Anordnung erlaubt zudem einen einfachen Austausch des oberen Dämpfungselements 9a, wobei lediglich eine sich am Rotor 2 befindende Klemmkrone 10 entfernt werden muss. Desweiterem schützt das Dämpfungselement 9a den Spalt zwischen Spindellagergehäuse 4 und Stator 3 vor Verschmutzung.

Die erfindungsgemässe Spindel hat u.a. den Vorteil, dass bei korrekter Auslegung der Spindelparameter der Rotor 2 inklusive Rotoroberteil, Kops, Garn, etc. somit eine relativ hohe statische Unwucht aufweisen kann, ohne dass beim Hochlaufen eine Berührung zwischen Rotor 2 und dem elastisch gelagerten Stator 3 oder dem Spindellagergehäuse 4 auftritt.

### Bezeichnungsliste

- 1: Spindel
- 2: Rotor
- 2a: Rotoroberteil
- 2b: Rotorunterteil
- 3: Stator
- 4: Spindellagergehäuse
- 5a: Oberes magnetisches Radiallager
- 5b: Unteres magnetisches Radiallager
- 6: Motor
- 7: Magnetisches Axiallager
- 8: Axialer Anschlag
- 9a: Oberes Dämpfungselement
- 9b: Unteres Dämpfungselement
- 10: Klemmkrone
- 11: Axialer Positionssensor und Sensor-Platine
- 12: Kopskapselung
- 13: Rotationsachse des Rotors
- 14: Distales Rotor-Ende
- 15: Proximales Rotor-Ende
- 16: Innere Wandung des Spindellagergehäuses
- 17: Äussere Wandung des Stators

- l1: Abstand zwischen den magnetischen Radiallagern 5a, 5b
- l2: Abstand zwischen den Dämpfungselementen 9a, 9b

## Patentansprüche

1. Spindel (1) für Spinnmaschinen mit einem einzelmotorischen Antrieb, die einen Rotor (2) und einen mit einem Spindellagergehäuse (4) verbundenen Stator (3) aufweist,
• wobei der Rotor (2) durch mindestens zwei passive magnetische Radiallager (5a, 5b) im Stator (3) gelagert ist,
• wobei der Rotor (2) durch einen Motor (6) angetrieben wird; und
• wobei der Rotor (2) durch ein aktives magnetisches Axiallager (7) gelagert ist,
**dadurch gekennzeichnet, dass**
der Stator (3) mit mindestens einem Dämpfungselement (9a, 9b) mit dem Spindellagergehäuse (4) verbunden ist.

2. Spindel (1) nach Anspruch 1, **dadurch gekennzeichnet, dass** der Stator (3) elastisch gelagert ist und mit mindestens einem oberen und einem unteren Dämpfungselement (9a, 9b) mit dem Spindellagergehäuse (4) verbunden ist.

3. Spindel (1) nach Anspruch 2, **dadurch gekennzeichnet, dass** das obere Dämpfungselement (9a) eine geringere Steifigkeit als das untere Dämpfungselement (9b) aufweist.

4. Spindel (1) nach einem der Ansprüche 2 und 3, **dadurch gekennzeichnet, dass** das obere Dämpfungselement (9a) eine radiale Steifigkeit von kleiner als 100 N/mm, vorzugsweise von 25 N/mm, und das untere Dämpfungselement (9b) eine radiale Steifigkeit von grösser als 60 N/mm aufweist.

5. Spindel (1) nach einem der vorhergehenden Ansprüche, **dadurch gekennzeichnet, dass** die Steifigkeit der passiven magnetischen Radiallager (5a, 5b) grösser als 20 N/mm ist.

6. Spindel (1) nach Anspruch 5, **dadurch gekennzeichnet, dass** der Abstand der beiden passiven magnetischen Radiallager (5a, 5b) grösser als 50 mm ist.

7. Spindel (1) nach einem der Ansprüche 2 bis 6, **dadurch gekennzeichnet, dass** die passiven magnetischen Radiallager (4a, 5b) entlang der Rotationsachse (13) des Rotors (3) zwischen dem oberen Dämpfungselement (9a) und dem unteren Dämpfungselement (9b) angeordnet sind.

8. Spindel (1) nach einem der vorhergehenden Ansprüche, **dadurch gekennzeichnet, dass** der Rotor (2) so ausgeführt ist, dass die erste biegekritische Frequenz oberhalb der Nenndrehzahl der Spindel (1) liegt.

9. Spindel (1) nach einem der vorhergehenden Ansprüche, **dadurch gekennzeichnet, dass** der Rotor (2) durch das aktive magnetische Axiallager (7) am unteren Wellenende gelagert ist.

10. Spindel (1) nach einem der vorhergehenden Ansprüche, **dadurch gekennzeichnet, dass** das aktive magnetische Axiallager (7) einen mit dem Stator (3) mechanisch verbundenen ersten Lagerteil und einen mit dem Rotor mechanisch verbundenen zweiten Lagerteil aufweist.

11. Spindel (1) nach einem der vorhergehenden Ansprüche, **dadurch gekennzeichnet, dass** das mindestens eine obere Dämpfungselement (9a) durch Entfernen einer Klemmkrone (10) einfach austauschbar ist.

12. Spindel (1) nach einem der vorhergehenden Ansprüche, **dadurch gekennzeichnet, dass** ein axialer Anschlag (8) am Rotor (2) vormontiert ist und bei der Montage des Rotors (2) in den Stator (3) der axiale Anschlag (8) in den Stator (3) eingepresst ist.

13. Spindel (1) nach einem der vorhergehenden Ansprüche, **dadurch gekennzeichnet, dass** der Stator (3) einen zylinderförmigen Abschnitt aufweist, der wenigstens teilweise in einer zylinderförmigen Öffnung des Spindellagergehäuse (4) angeordnet ist, wobei die Zylinderachse des zylinderförmigen Abschnitts des Stators (3) auf der Zylinderachse der zylinderförmigen Öffnung des Spindellagergehäuses (4) liegt.

14. Eine Spinnmaschine, insbesondere eine Ringspinnmaschine mit wenigstens einer Spindel (1) gemäss einem der vorhergehenden Ansprüche

15. Spinnmaschine gemäss Anspruch 14, **dadurch gekennzeichnet, dass** wenigstens eine Spindel (1) während dem Betrieb eine Kopskapselung (12) aufweist.

## Claims

1. Spindle (1) for spinning machines having a single motor drive, which has a rotor (2) and a stator (3) connected to a spindle bearing housing (4),
• wherein the rotor (2) is mounted in the stator (3) by means of at least two passive magnetic radial bearings (5a, 5b),
• wherein the rotor (2) is driven by a motor (6); and
• wherein the rotor (2) is mounted by means of an active magnetic axial bearing (7),
**characterized in that**
the stator (3) is connected to the spindle bearing housing (4) by means of at least one damping element (9a, 9b).

2. Spindle (1) according to claim 1, **characterized in that** the stator (3) is resiliently mounted and is connected to the spindle bearing housing (4) by means of at least one upper and one lower damping element (9a, 9b).

3. Spindle (1) according to claim 2, **characterized in that** the upper damping element (9a) has a lower rigidity than the lower damping element (9b).

4. Spindle (1) according to claim 2 or 3, **characterized in that** the upper damping element (9a) has a radial rigidity of less than 100 N/mm, preferably of 25 N/mm, and the lower damping element (9b) has a radial rigidity of greater than 60 N/mm.

5. Spindle (1) according to one of the preceding claims, **characterized in that** the rigidity of the passive, magnetic radial bearings (5a, 5b) is greater than 20 N/mm.

6. Spindle (1) according to claim 5, **characterized in that** the distance between the two passive, magnetic radial bearings (5a, 5b) is greater than 50 mm.

7. Spindle (1) according to one of claims 2 to 6, **characterized in that** the passive magnetic radial bearings (4a, 5b) are arranged along the rotational axis (13) of the rotor (3) between the upper damping element (9a) and the lower damping element (9b).

8. Spindle (1) according to one of the preceding claims, **characterized in that** the rotor (2) is designed in such a way that the first critical bending frequency is above the nominal speed of the spindle (1).

9. Spindle (1) according to one of the preceding claims, **characterized in that** the rotor (2) is mounted on the lower shaft end by means of the active magnetic axial bearing (7).

10. Spindle (1) according to one of the preceding claims, **characterized in that** the active magnetic axial bearing (7) comprises a first bearing part mechanically connected to the stator (3) and a second bearing part mechanically connected to the rotor.

11. Spindle (1) according to one of the preceding claims, **characterized in that** the at least one damping element (9a) can be easily exchanged by removing a clamping crown (10).

12. Spindle (1) according to one of the preceding claims, **characterized in that** an axial stop (8) is preassembled on the rotor (2) and the axial stop (8) is pressed into the stator (3) when the rotor (2) is installed in the stator (3).

13. Spindle (1) according to one of the preceding claims, **characterized in that** the stator (3) comprises cylindrical section which is at least partially arranged in a cylindrical opening of the spindle bearing housing (4), the cylinder axis of the cylindrical section of the stator (3) lying on the cylinder axis of the cylindrical opening of the spindle bearing housing (4).

14. A spinning machine, in particular a ring spinning machine with at least one spindle (1) according to one of the preceding claims.

15. Spinning machine according to claim 14, **characterized in that** at least one spindle (1) during operation has a cop encapsulation (12)

## Revendications

1. Broche (1) pour machines à filer comprenant un entraînement à un moteur, lequel présente un rotor (2) et un stator (3) relié à un boîtier de palier de broche (4),
• le rotor (2) étant placé dans le stator (3) par le biais d'au moins deux paliers radiaux magnétiques passifs (5a, 5b),
• le rotor (2) étant entraîné par un moteur (6) ; et
• le rotor (2) étant placé par le biais d'un palier axial magnétique actif (7),
**caractérisée en ce que**
le stator (3) est relié au boîtier de palier de broche (4) au moyen d'au moins un élément d'amortissement (9a, 9b).

2. Broche (1) selon la revendication 1, **caractérisée en ce que** le stator (3) est placé de manière élastique et relié au boîtier de palier de broche (4) au moyen d'au moins un élément d'amortissement supérieur et un inférieur (9a, 9b).

3. Broche (1) selon la revendication 2, **caractérisée en ce que** l'élément d'amortissement supérieur (9a) présente une rigidité inférieure à celle de l'élément d'amortissement inférieur (9b).

4. Broche (1) selon l'une des revendications 2 et 3, **caractérisée en ce que** l'élément d'amortissement supérieur (9a) présente une rigidité radiale inférieure à 100 N/mm, de préférence de 25 N/mm, et l'élément d'amortissement inférieur (9b) présente une rigidité supérieure à 60 N/mm.

5. Broche (1) selon l'une des revendications précédentes, **caractérisée en ce que** la rigidité des paliers radiaux magnétiques passifs (5a, 5b) est supérieure à 20 N/mm.

6. Broche (1) selon la revendication 5, **caractérisée en ce que** la distance entre les deux paliers radiaux magnétiques passifs (5a, 5b) est supérieure à 50 mm.

7. Broche (1) selon l'une des revendications 2 à 6, **caractérisée en ce que** les paliers radiaux magnétiques passifs (4a, 5b) sont disposés le long de l'axe de rotation (13) du rotor (3) entre l'élément d'amortissement supérieur (9a) et l'élément d'amortissement inférieur (9b).

8. Broche (1) selon l'une des revendications précédentes, **caractérisée en ce que** le rotor (2) est conçu de telle façon que la première fréquence critique en flexion se situe au-dessus de la vitesse de rotation nominale de la broche (1).

9. Broche (1) selon l'une des revendications précédentes, **caractérisée en ce que** le rotor (2) est placé au niveau de l'extrémité d'arbre inférieure par le biais du palier axial magnétique actif (7).

10. Broche (1) selon l'une des revendications précédentes, **caractérisée en ce que** le palier axial magnétique actif (7) présente une première partie de palier reliée mécaniquement au stator (3) et une seconde partie de palier reliée mécaniquement au rotor.

11. Broche (1) selon l'une des revendications précédente, **caractérisée en ce que** l'au moins un élément d'amortissement supérieur (9a) peut être facilement échangé par le biais du retrait d'une couronne de serrage (10).

12. Broche (1) selon l'une des revendications précédentes, **caractérisée en ce qu'**une butée axiale (8) est pré-montée sur le rotor (2) et que, lors du montage du rotor (2) dans le stator (3), la butée axiale (8) est pressée dans le stator (3).

13. Broche (1) selon l'une des revendications précédentes, **caractérisée en ce que** le stator (3) présente une section de forme cylindrique, laquelle est au moins partiellement disposée dans une ouverture de forme cylindrique du boîtier de palier de broche (4), l'axe de cylindre de la section de forme cylindrique du stator (3) étant situé sur l'axe de cylindre de l'ouverture de forme cylindrique du boîtier de palier de broche (4).

14. Machine à filer, en particulier machine à filer à anneaux, comprenant au moins une broche (1) selon l'une des revendications précédentes

15. Machine à filer selon la revendication 14, **caractérisée en ce qu'**au moins une broche (1) présente un encapsulage de canette (12) durant le fonctionnement.
